# EUROPEAN PATENT SPECIFICATION

(11) **EP 4 542 939 B1**
(45) Date of publication and mention of the grant of the patent: **12.08.2026**
(21) Application number: 23204209.3
(22) Date of filing: 17.10.2023
(51) Int. Cl.: H04L 12/413

(54) **A RECONCILIATION MODULE AND ASSOCIATED METHOD FOR COLLISION AVOIDANCE**
ABGLEICHMODUL UND ZUGEHÖRIGES VERFAHREN ZUR KOLLISIONSVERMEIDUNG
MODULE DE RAPPROCHEMENT ET PROCÉDÉ ASSOCIÉ POUR ÉVITER DES COLLISIONS

(43) Date of publication of application: 23.04.2025
(73) Proprietor: NXP B.V., 5656 AG Eindhoven (NL)
(72) Inventor: den Besten, Gerrit Willem, 5656 AG Eindhoven (NL); Axer, Philip, 5656 AG Eindhoven (NL)
(74) Representative: Schmütz, Christian Klaus Johannes

(56) References cited:
- US-A1- 2006 248 249
- US-A1- 2021 058 965
- US-A1- 2023 198 665

## Description

### Field

The present disclosure relates to multidrop bus networks, and in particular concerns an apparatus and associated method of collision avoidance for a node of a multidrop bus network.

### Background

Collisions on the bus of a multidrop bus network can cause a decrease in bus efficiency and throughput. The apparatus and associated method described herein may address this issue.

US 2021/0058965 (A1) discloses systems and devices for interfacing media access tuning circuitry that implements collision handling or traffic shaping with a reduced media independent interface (RMII).

### Summary

The present invention is defined in the appended claims. According to a first aspect of the present disclosure, there is provided a reconciliation module for a node of a multidrop bus network, the node comprising a MAC module and a PHY module, the reconciliation module comprising circuitry configured to:
assert a sense signal until the beginning of each transmit opportunity of the node;
de-assert the sense signal at that moment to cause the MAC module to send available data to the reconciliation module to start transmission of the data on the multidrop bus network via the PHY module at the respective transmit opportunity; and
re-assert the sense signal on receipt of the data from the MAC module or time-out of the respective transmit opportunity.

The MAC module may be configured to delay sending of the data by a wait time after de-assertion of the sense signal, and the reconciliation module may be configured to pass the data received from the MAC module to the PHY module for transmission on the multidrop bus network without transmitting a filler sequence during the wait time of the MAC module.

In one or more embodiments, each transmit opportunity may have a duration which is equal to or greater than the wait time of the MAC module.

In one or more embodiments, the wait time of the MAC module may be equal to an inter-packet-gap length.

In one or more embodiments, in the event the MAC module sends data to the reconciliation module that cannot be transmitted on the multidrop bus network starting at a transmit opportunity, the reconciliation module may be configured to:
assert a collision signal on receipt of the data from the MAC module to stop the MAC module from continuing to send the data; and
control the sense signal to cause the MAC module to resend the data for transmission starting at the next transmit opportunity.

In one or more embodiments, the data sent by the MAC module may comprise a plurality of data frames within the same sequence for transmission starting at a transmit opportunity, and the reconciliation module may be configured to insert an active-idle sequence between adjacent data frames to prevent the multidrop bus network from becoming idle before the plurality of data frames have been transmitted.

In one or more embodiments, the reconciliation module may be bufferless.

According to a second aspect of the present disclosure, there is provided a node of a multidrop bus network, the node comprising the reconciliation module of the first aspect, the MAC module and the PHY module.

In one or more embodiments, the multidrop bus network may be an Ethernet network, the MAC module may be an Ethernet CSMA/CD MAC layer and the PHY module may be a 10BASE-T1S PHY layer.

According to a third aspect of the present disclosure, there is provided a multidrop bus network comprising a plurality of the nodes of the second aspect.

According to a fourth aspect of the present disclosure, there is provided a method of collision avoidance for a node of a multidrop bus network, the node comprising a reconciliation module, a MAC module and a PHY module, the method comprising:
asserting, by the reconciliation module, a sense signal until the beginning of each transmit opportunity of the node;
de-asserting, by the reconciliation module, the sense signal at that moment to cause the MAC module to send available data to the reconciliation module to start transmission of the data on the multidrop bus network via the PHY module at the respective transmit opportunity; and
re-asserting, by the reconciliation module, the sense signal on receipt of the data from the MAC module or time-out of the respective transmit opportunity.

According to a fifth aspect of the present disclosure, there is provided a computer program comprising computer code configured to control the reconciliation module of the first aspect, control the node of the second aspect, control the multidrop bus network of the third aspect, or perform the method of the fourth aspect.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows the IEEE-standard media-independent interface (MII) between MAC and PHY modules;
Figure 2 shows a reconciliation module between the MAC and PHY modules to avoid bus collisions, wherein both the MAC and PHY modules communicate with the reconciliation module using a MII;
Figure 3 shows a reconciliation module with data buffer between the MAC and PHY modules;
Figure 4 shows transmission attempts by the MAC module of the node of Figure 3 on a fully-loaded bus;
Figure 5 shows transmission attempts by the MAC module of the node of Figure 3 in which a transmit opportunity has timed out;
Figure 6 shows transmission attempts by the MAC module of the node of Figure 3 in which consecutive transmit opportunities have timed out;
Figure 7 shows a reconciliation module without data buffer between the MAC and PHY modules;
Figure 8 shows transmission attempts by the MAC module of the node of Figure 7 on a fully-loaded bus;
Figure 9 shows transmission attempts by the MAC module of the node of Figure 7 in which a transmit opportunity has timed out;
Figure 10 shows transmission attempts by the MAC module of the node of Figure 7 in which consecutive transmit opportunities have timed out;
Figure 11 shows a method of collision avoidance for a node of a multidrop bus network; and
Figure 12 shows a computer-readable medium comprising a computer program configured to control, perform or enable the method of Figure 11.

### Detailed Description

### Ethernet standards

While much of the focus in recent Ethernet development has centred on high data rates, not every application requires speeds of up to 400 Gbps. For some applications, including Internet of Things (IoT), industrial and automotive, 10 Mbps is sufficient for certain functions. Factors like cost, weight, distance and the space required for cables are more important for these use cases.

Recognizing these evolving requirements, IEEE began work in early 2017 to define IEEE 802.3cg, a standard for single-pair Ethernet that supports 10 Mbps. The goals of IEEE 802.3cg were to define a point-to-point and a multidrop short-distance standard with a maximum length of 25 meters, and a long-distance point-to-point standard that supports distances up to 1,000 meters. The resulting IEEE 802.3cg specification includes two link-layer standards: 10BASE-T1S and 10BASE-T1L.

The 10BASE-T1S short-range standard is primarily targeted at automotive and industrial applications. Multiple nodes on the network can share a cable in half-duplex shared-medium mode (multidrop mode) using the standard Ethernet Carrier-Sense Multiple Access with Collision Detection (CSMA/CD) access method or operate using PHY-Level Collision Avoidance (PLCA). The cable might be an unshielded twisted pair (UTP) that may have multiple nodes with their medium dependent interfaces (MDIs) attached thereto. As such, 10BASE-T1S may also be referred to as Multidrop Single Pair Ethernet.

The 10BASE-T1L long-range option is designed for IoT and industrial control applications. The 1,000-meter range is sufficient for use in large factories or warehouses, and 10 Mbps is sufficient for gathering data from sensors and to monitor and control many types of industrial machinery. It shares the advantages of the short network variant: MAC-level compatibility with multipair Ethernet and lower cost, weight and required space.

The following description relates to the 10BASE-T1S standard but may be also applicable to other (including future) networking standards and is therefore not necessarily limited to Ethernet or 10BASE-T1S.

### Technical problem

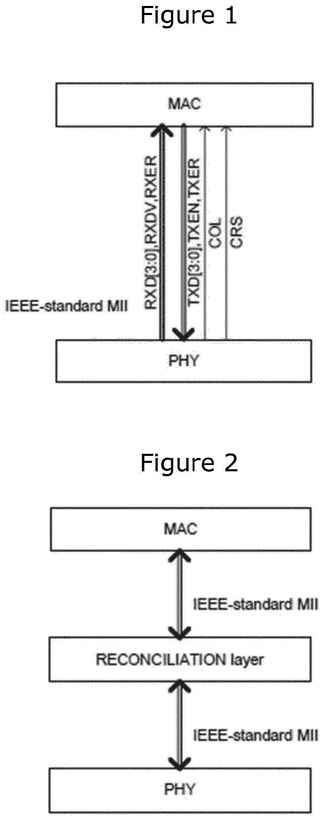

Figure 1 illustrates the carrier-sense multiple access with collision detection (CSMA/CD) media access control (MAC) protocol. CSMA/CD uses carrier-sensing (CRS) to defer transmissions until no other nodes on the network are transmitting. When a collision is detected by the PHY module/layer of a node (CRS=1), it stops transmitting that frame, asserts a collision signal (COL=1) to the MAC module/layer of the node, and waits until the bus is silent before de-asserting the sense signal (CRS=0). The MAC module keeps transmitting for a predefined (jam) time to ensure that all nodes on the bus will observe the collision and then pauses for a predefined time interval before trying to resend the frame to the PHY module for re-transmission on the bus. The first re-transmission attempt occurs one IPG time after the sense signal (CRS) is de-asserted. If that would result in another collision, however, then the MAC module introduces a random variable back-off time from the second re-transmission attempt onwards to avoid indefinitely repeated collisions.

A problem with CSMA/CD is that multiple nodes may attempt to transmit data on the bus simultaneously when the bus is silent. This leads to collisions, corrupted data, time-outs and loss of bus capacity, which in turn can result in severe degradation of effective bus throughput or even a complete collapse as the total bus load gets closer to (e.g. around 70% of) the maximum bus capacity.

Figure 2 shows an example of a collision avoidance mechanism developed to improve bus capacity. This mechanism is known as physical layer collision avoidance (PLCA) and uses a reconciliation module/layer connected between the MAC and PHY modules with respective IEEE-standard media-independent interfaces (MIIs). Each MII may comprise the same set of pins: transmit data (TXD[3:0]), transmit enable (TXEN), transmit error (TXER), receive data (RXD[3:0]), received data valid (RXDV), receive error (RXER), collision detect (COL) and carrier sense (CRS), and furthermore two clock signals (TXCLK and RXCLK, not shown) as defined in IEEE 802.3 Clause 22.

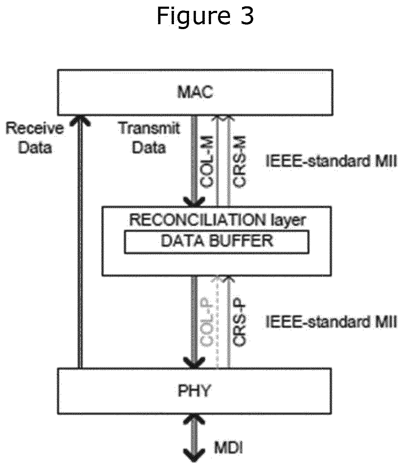

PLCA uses a round-robin scheme in which the nodes are numbered and given the opportunity to transmit one at a time starting at a dedicated time slot (or transmit opportunity TO) in a cyclic manner based on their numbering. One node is assigned as the head node (or PLCA coordinator) and starts each cycle with a beacon. If no data is transmitted by a node at its transmit opportunity, the transmit opportunity is passed to the next node. The reconciliation module knows when the transmit opportunity of its node occurs based on the node number and manages the MAC module using collision (COL-M) and sense (CRS-M) signal manipulations to prevent the MAC module from sending data that cannot be transmitted by the PHY module. In this way, the reconciliation module only passes data to the PHY module when there is a transmit opportunity. The combination of the round-robin scheme with the reconciliation module therefore avoids collisions on the bus. Since there should be no collision events for the PHY module to report, the COL-P pin becomes functionally redundant (and is hence greyed out in Figure 3) but may still be useful for detecting true bus problems.

Figure 3 shows an example of a PLCA mechanism involving a reconciliation module with data buffer (e.g. a first in first out buffer). The data buffer addresses a scenario in which the reconciliation module starts to receive data from the MAC module shortly before a transmit opportunity of the node. In this scenario, the data has been sent from the MAC module too early to be transmitted immediately but too late for the reconciliation module to signal a collision and have the data re-transmitted in time for the upcoming transmit opportunity. The data buffer therefore enables the reconciliation module to temporarily store data sent from the MAC module so that it can be passed to the PHY module for transmission at the upcoming transmit opportunity.

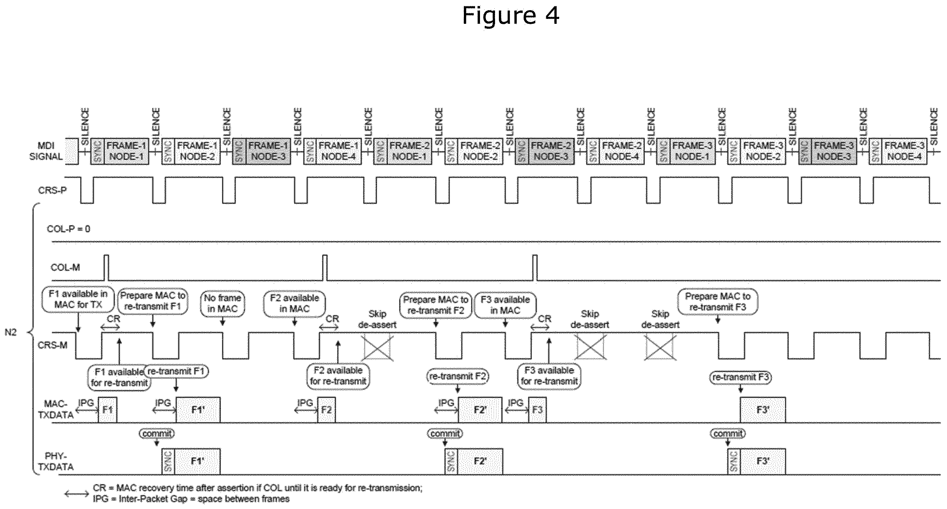

Figure 4 shows transmission attempts (MAC-TXDATA) by the MAC module of a node with the collision avoidance mechanism of Figure 3 on a fully-loaded bus, wherein frames are timely available in the MAC modules of the respective nodes to utilise every transmit opportunity. In this figure, four nodes are transmitting data on the bus with each node transmitting a single data frame at each of its respective transmit opportunities. The numbering of the nodes is provided for illustrative purposes and is non-limiting (e.g. the head node may be numbered "0" in practice). The first transmission attempts of node 2 for data frames 1-3 are respectively denoted F1-F3 and the second (re-)transmission attempts are respectively denoted F1'-F3'.

The reconciliation module receives a detect signal (CRS-P) from the PHY module indicative of transmission activity detected on the bus. The detect signal substantially follows the bus schedule with a slight delay depending on the responsiveness of the PHY module to detect and report the bus activity. The reconciliation module is configured to de-assert the sense signal (CRS-M) each time the detect signal (CRS-P) is de-asserted, unless there has been an earlier transmission attempt by the MAC module for the same frame as described below.

The MAC module is configured to send data to the reconciliation module whenever it has a frame pending for transmission and the sense signal (CRS-M) has been de-asserted by the reconciliation module. To ensure a minimum gap between frames for most Ethernet PHY types, however, the MAC module will delay sending the data to the reconciliation module by a wait time after de-assertion of the sense signal (CRS-M). In this example shown, the wait time of the MAC module is equal to an inter-packet-gap (IPG) length (e.g. 12 bytes). The reconciliation module then re-asserts the sense signal (CRS-M) again on receipt of the data from the MAC module or on detecting activity on the bus via the detect signal (CRS-P). In the examples shown herein, de-assertion of the sense signal (CRS-M) is directly correlated with de-assertion of the detect signal (CRS-P), but re-assertion of the sense signal (CRS-M) is slightly delayed relative to re-assertion of the detect signal (CRS-P). This is intended to help ensure that the MAC module sends the pending data after the wait time even if the transmit opportunities are shorter than 1 IPG but may not be necessary. As such, re-assertion of the sense signal (CRS-M) could also be directly correlated with re-assertion of the detect signal (CRS-P).

While the sense signal (CRS-M) is de-asserted, the data from the MAC module is buffered in the reconciliation module provided the buffer does not overflow. If a transmission attempt by the MAC module cannot be sufficiently aligned with a transmit opportunity for that node using the buffer, the reconciliation module is configured to assert a collision signal (COL-M) to stop the MAC module from continuing to send the data. This happens by default when another node starts transmitting on the bus and the detect signal (CRS-P) is asserted. The reconciliation module then de-asserts the collision signal (COL-M). The collision signal (COL-M) need only be asserted long enough to be recognised by the MAC module, and should ideally be as short as possible (e.g. one clock cycle) to avoid any loss of time until recovery.

Following assertion of the collision signal (COL-M) by the reconciliation module, the sense signal (CRS-M) is not immediately de-asserted. This is for two reasons. Firstly, the MAC module requires a recovery time (CR) following assertion of the collision signal (COL-M) before it can resend the data as part of the upcoming transmission attempt. Secondly, it is more efficient for the bus to try and ensure that the re-transmission attempt is synchronised with the upcoming transmit opportunity to avoid any further delays in transmitting the data frame. To achieve this, the sense signal (CRS-M) is kept asserted until the data can be directly transmitted without buffering at the upcoming transmit opportunity and then de-asserted to enable said transmission after the recovery time of the MAC module.

The data frame is then passed by the reconciliation module to the PHY module for transmission (PHY-TXDATA) starting at the upcoming transmit opportunity. It should be mentioned that transmit opportunities can be relatively short (e.g. shorter than the IPG length) and typically do not provide enough time for a node to transmit complete frames. Rather, they provide a time slot or window for the node to claim the bus before the opportunity times out and the next node has the opportunity. A node can claim the bus during a transmit opportunity by starting to transmit a data frame or a filler sequence (SYNC symbols). For example, the reconciliation module may be configured to transmit SYNC symbols on the bus via the PHY module during the wait time of the MAC module. Once the bus has been claimed by the node, it can then proceed to transmit any frame size or even multiple data frames if configured to allow this.

In the example of Figure 4, the upcoming transmit opportunity for frame 1 of node 2 is the next transmit opportunity on the bus schedule following the (virtual) collision. For frames 2 and 3 of node 2, on the other hand, there are intervening transmit opportunities for other nodes on the bus schedule. Since the reconciliation module keeps the sense signal (CRS-M) asserted until the frames can be re-transmitted at the respective upcoming transmit opportunities, the de-assertions of the sense signal (CRS-M) which would otherwise follow the detect signal (CRS-P) from the PHY module are skipped.

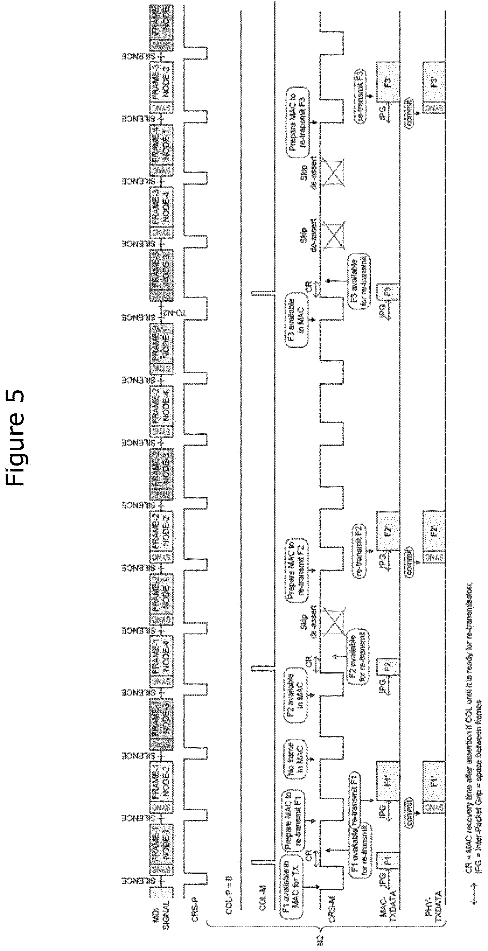

Figure 5 shows further transmission attempts by the MAC module of a node with the collision avoidance mechanism of Figure 3. Unlike the example of Figure 4 in which every transmit opportunity on the bus is used (i.e. a fully-loaded bus), one of the transmit opportunities for node 2 has timed out. This is because frame 3 of node 2 only becomes available in the MAC module sometime during the transmission of frame 3 of node 1. Since the MAC module delays sending data to the reconciliation module by a wait time of one IPG after de-assertion of the sense signal (CRS-M), there is insufficient time to start transmitting frame 3 in the upcoming transmit opportunity for that node if the transmit opportunity ends within roughly 1 IPG length after de-assertion of the sense signal (CRS-M). As such, the reconciliation module asserts the collision (COL-M) and sense (CRS-M) signals and keeps the sense signal (CRS-M) asserted until the next transmit opportunity of the node is detected, at which point it is de-asserted to enable transmission of the frame on the bus. It is important to note here that, although the reconciliation module can temporarily store a limited amount of data in the buffer, the buffer is flushed if any other node transmits data between the transmit opportunities of this node (otherwise a large buffer to store complete frames would be required in the reconciliation module). For this reason, frame 3 could not be stored in the buffer in preparation for the next transmit opportunity of node 2 (hence why the collision signal (COL-M) was asserted and the first transmission attempt aborted).

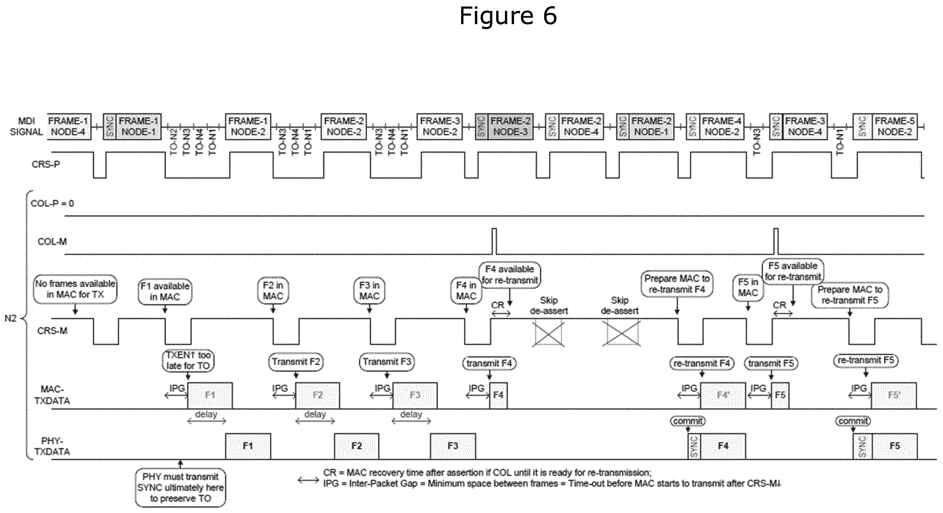

Figure 6 shows further transmission attempts by the MAC module of a node with the collision avoidance mechanism of Figure 3. In this example, consecutive transmit opportunities for nodes 3, 4 and 1 have each timed out such that node 2 is the only node transmitting on the bus for a duration. This is referred to herein as a "boomerang transmit opportunity" for node 2 where the transmit opportunity for this node returns without any intervening transmissions by other nodes.

As shown in the figure, the MAC module attempts to transmit frame 1 an IPG length after the sense signal (CRS-M) is de-asserted following transmission of the first frame by node 1. Since this is too late for transmission at the upcoming transmit opportunity of node 2, the reconciliation module temporarily stores frame 1 in the buffer until the next transmit opportunity arrives, at which point it is transmitted on the bus by the PHY module. This is only possible because there are no intervening transmissions by other nodes, otherwise the buffer would have been flushed and a collision signal (COL-M) asserted (as per the example in Figure 5). The result is the transmission of frames 1-3 by node 2 being delayed by the buffer until the respective transmit opportunities of that node without the need for any re-transmission attempts by the MAC module. In contrast, collision signals (COL-M) are asserted for frames 4 and 5 because they are received from the MAC module while there are intervening transmissions by other nodes. These frames are therefore re-transmitted at the next transmit opportunity similar to the previous examples.

Although the PLCA mechanism successfully avoids collisions on the bus by blocking transmission outside of the scheduled transmit opportunities for the node, the use of a data buffer in the reconciliation module complicates the system and loses its benefit when the MAC module tries to send more data - before it can be transmitted on the bus - than the buffer can temporarily store. Furthermore, the time-period during which it is too early to transmit the data from the MAC module and yet too late for re-transmission after a virtual collision is relatively short in relation to the total bus cycle time. Also, the head node may transmit a beacon at the beginning of every bus cycle as mentioned previously. In this scenario, unless the head node is the only transmitting node, or the head node sends a short fixed-length beacon but no data frame, the buffer could potentially be flushed by transmission of the beacon thus preventing the boomerang transmit opportunity illustrated in Figure 6. In view of the above, it can be difficult to justify the additional cost and complexity associated with the data buffer.

### Embodiments of the present disclosure

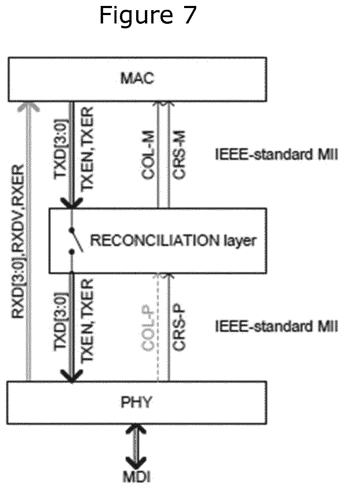

Figure 7 shows an example of a collision avoidance mechanism involving a reconciliation module (or layer) which avoids collisions on the bus without requiring a data buffer. As in the previous examples, the reconciliation module is configured to receive data sent from the MAC module (or layer) for transmission on the multidrop bus network via the PHY module (or layer) at a transmit opportunity of the node. The MAC module is configured to send data to the reconciliation module whenever it has a frame pending for transmission, the sense signal (CRS-M) has been de-asserted by the reconciliation module, and the wait time has passed following de-assertion of the sense signal (CRS-M).

Also, in the event that the data is received from the MAC module while not being able to transmit it via the PHY module, the reconciliation module is configured to assert a collision signal (COL-M), keep the sense signal (CRS-M) asserted until the data can be transmitted at the upcoming transmit opportunity, and then de-assert the sense signal (CRS-M) at the upcoming transmit opportunity to enable said transmission.

Unlike the earlier collision avoidance mechanism, however, the reconciliation module does not de-assert the sense signal (CRS-M) each time the detect signal (CRS-P) is de-asserted. Instead, the reconciliation module is configured to de-assert the sense signal (CRS-M) only at the beginning of each transmit opportunity of the node. In particular, the sense signal (CRS-M) is de-asserted at that moment to cause the MAC module to send available data to the reconciliation module to start transmission of the data at the respective transmit opportunity, and then re-asserted on receipt of the data from the MAC module.

This approach ensures that data which is already pending in the MAC module is passed to the reconciliation module at just the right time to enable it to be transmitted at the upcoming transmit opportunity of the node as a first transmission attempt. Furthermore, it avoids the need for the reconciliation module to buffer the data, and also avoids the need for collision signals to be asserted for those data frames that are available (pending) in advance of the upcoming transmit opportunity. For this scheme to work, the separation of frames on the bus should be equal to or larger than 1 IPG. The benefit is simplicity, but the penalty is additional quiet time on the bus between frames.

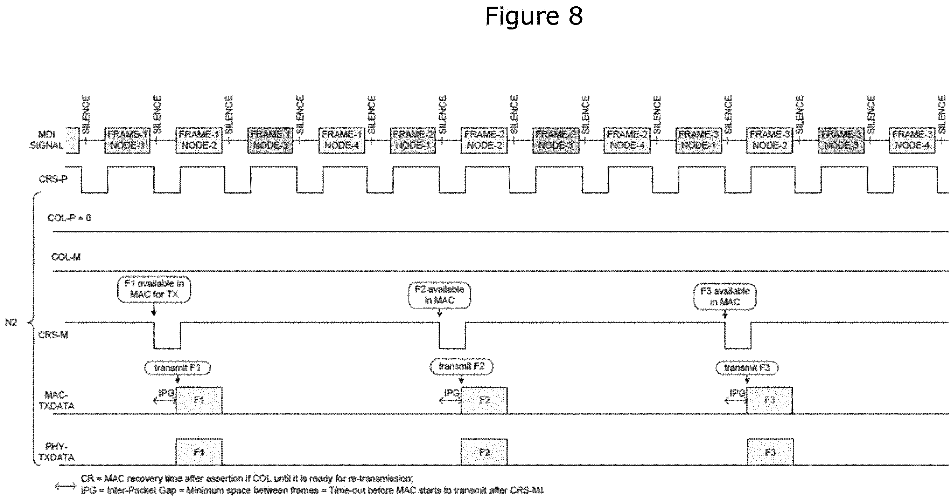

Figure 8 shows transmission attempts (MAC-TXDATA) by the MAC module of a node (node 2 in this example), and the associated data transmission (PHY-TXDATA) by the PHY module of the node, with the collision avoidance mechanism of Figure 7 on a fully-loaded bus for comparison with Figure 4. Although the bus schedule is shown with a fixed bus cycle time and fixed frame lengths for the nodes, this is merely an example and is not necessary. In this figure, the wait time of each MAC module is equal to one IPG length.

The duration of a transmit opportunity is a variable to be set by a system integrator and depends on several parameters. In practice, it would likely be around 0.5 IPG lengths for the collision avoidance mechanism of Figure 3. With the collision avoidance mechanism of Figure 7, however, each transmit opportunity must have a duration of equal to or greater than the wait time of the MAC module, which is typically one IPG length. This increases the chance that frames will be received in sufficient time for transmission on the first attempt. Furthermore, it keeps the minimum distance between frames on the bus at or above 1 IPG length, like for many other Ethernet PHY modules/layers. For first transmission attempts, the reconciliation module has no knowledge of the pending frame. As such, it cannot claim the bus by sending SYNC symbols (i.e. a filler sequence) to the PHY module during the wait time as it could do for re-transmission attempts when it knows for sure that a frame is coming from the MAC module. In addition, the longer transmit opportunity eliminates the need for the reconciliation module to claim the bus anyway before a frame gets transmitted by the MAC, as the MAC wait time before receiving a frame from the MAC can be accommodated.

As shown in Figure 8, frames 1-3 of node 2 are available in the MAC module at the start of the respective transmit opportunity. As such, they are passed to the reconciliation module once the wait time has expired and transmitted on the first attempt. Also, even though the transmit opportunities and silent spacing between transmissions of different nodes may be longer than the example of Figure 4, the efficiency of the bus (PHY-TXDATA) is unaffected because filler sequences are not required to claim the bus.

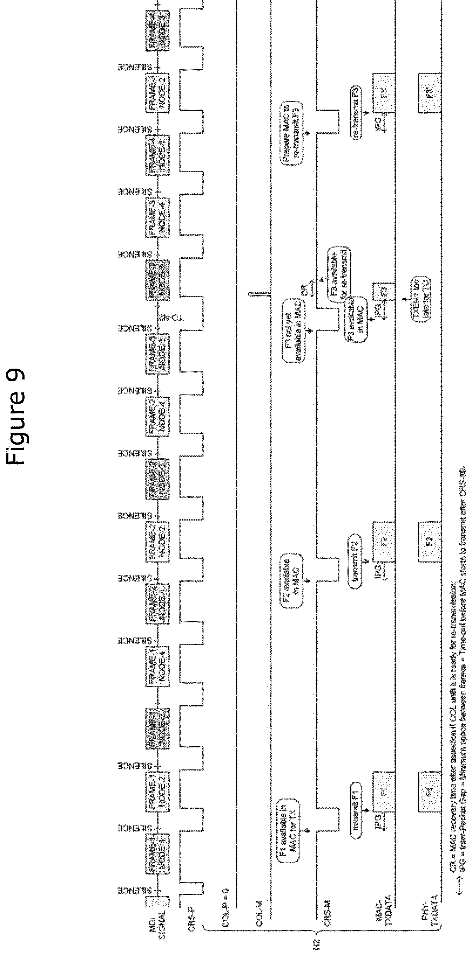

Figure 9 shows transmission attempts by the MAC module of node 2 with the collision avoidance mechanism of Figure 7 for comparison with Figure 5. Like the example of Figure 5, the transmit opportunity for frame 3 of node 2 times out because this frame arrives too late for transmission at the transmit opportunity (i.e. frame 3 is not pending/available in the MAC module until well into the transmit opportunity period). As a result, the reconciliation module is forced to assert a collision signal (COL-M) on receipt of the data from the MAC module to stop it from continuing to send the data, and then control the sense signal (CRS-M) to cause the MAC module to resend the data for transmission at the next transmit opportunity (similar to before). This demonstrates that even with longer transmit opportunities, there can still be occasions where the data frames are received from the MAC module too late to be transmitted at the first transmit opportunity and need to be delayed until the next (second) transmit opportunity. Again, there is no impact on the bus efficiency relative to Figure 5.

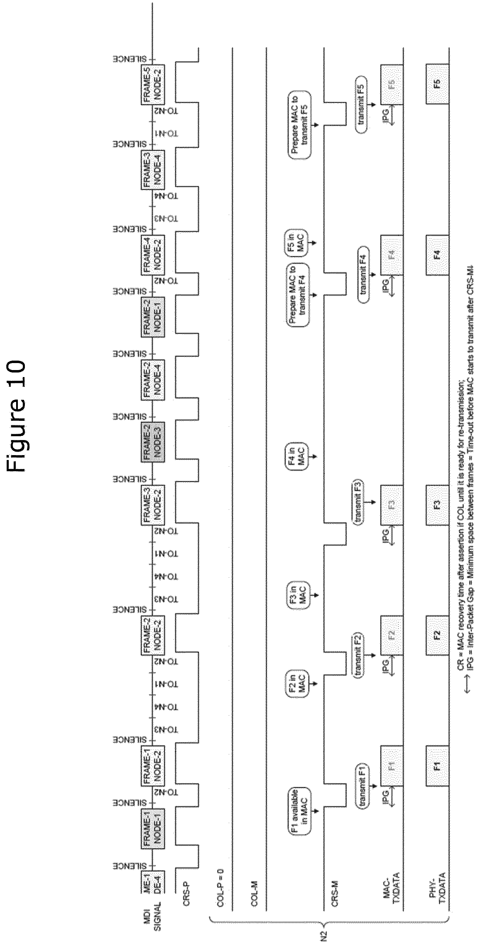

Figure 10 shows further transmission attempts by the MAC module of node 2 with the collision avoidance mechanism of Figure 7 for comparison with Figure 6. Again, consecutive transmit opportunities for nodes 3, 4 and 1 have each timed out such that node 2 is the only node transmitting on the bus for a duration (i.e. boomerang transmit opportunities). This time, however, instead of the reconciliation module buffering frames 1-3 which are received from the MAC module too early for immediate transmission, the asserted sense signal (CRS-M) prevents the MAC module from sending the frames until the transmit opportunity arrives. As such, the reconciliation module receives these frames immediately after the wait time of the MAC module, which are then passed to the PHY module for transmission on the first attempt at their respective transmit opportunity.

Regarding frames 4 and 5, keeping the sense signal (CRS-M) asserted between consecutive transmissions of the same node means that the MAC module cannot pass these frames to the reconciliation module while other nodes are transmitting. For this reason, the assertion of collision signals and re-transmission of frames 4 and 5 as in Figure 6 are avoided.

As illustrated with the above examples, the collision avoidance mechanism of Figure 7 provides a simpler approach to preventing collisions on the bus than existing systems by removing the need for the reconciliation module to buffer data or transmit SYNC symbols. Furthermore, increasing the length of the transmit opportunities for the node(s) increases the number of frames that are transmitted at the first transmit opportunity thereby reducing the number of aborted frames (using COL-M) and re-transmission attempts.

Although the illustrated examples show each transmit opportunity limited to the transmission of a single data frame, it is also possible for a node to transmit a plurality of data frames within a single sequence starting at one transmit opportunity. To allow for this, the reconciliation module may be configured to insert an active-idle sequence between adjacent data frames of the sequence to prevent the bus from becoming idle before the plurality of data frames have been transmitted.

Each node of the multidrop bus network described herein may comprise a MAC module, a PHY module and a reconciliation module. The multidrop bus network may be an Ethernet network, the MAC module may be an Ethernet CSMA/CD MAC layer and the PHY module may be a 10BASE-T1S PHY layer. Furthermore, given that the reconciliation module described in relation to Figure 7 does not require a data buffer, the reconciliation module may be bufferless. Even in "bufferless" examples without a data buffer for storing frames until the next transmit opportunity, the reconciliation module may still comprise a small buffer of a few bits in size to facilitate parsing of data between layers/modules of the Ethernet protocol.

Although the reconciliation module (or layer) has been described herein with reference to the MAC and PHY modules (or layers), it could be formed independently of the other modules and incorporated into the node during a subsequent modular assembly process. In some cases, the reconciliation module may even be retrofit to an existing node. Alternatively, the reconciliation module may be integrated with the other modules of the node at the time of manufacture (e.g. as different parts/portions of the same chip). One or more (or each) module may comprise circuitry including at least one processor and at least one memory including computer program code. The at least one memory and computer program code may be configured to, with the at least one processor, cause the module to perform the associated functionality described herein.

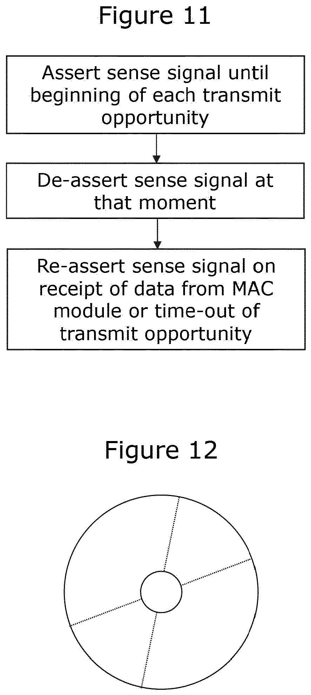

Figure 11 illustrates schematically the main steps of a method of collision avoidance for a node of a multidrop bus network, the node comprising a reconciliation module, a MAC module and a PHY module. As shown, the method comprises:
asserting, by the reconciliation module, a sense signal until the beginning of each transmit opportunity of the node;
de-asserting, by the reconciliation module, the sense signal at that moment to cause the MAC module to send available data to the reconciliation module to start transmission of the data on the multidrop bus network via the PHY module at the respective transmit opportunity; and
re-asserting, by the reconciliation module, the sense signal on receipt of the data from the MAC module or time-out of the respective transmit opportunity.

Figure 12 illustrates schematically a computer/processor readable medium providing a computer program according to one example. The computer program may comprise computer code configured to perform, control or enable one or more of the method steps of Figure 11 using a reconciliation module described herein. In this example, the computer/processor readable medium is a disc such as a digital versatile disc (DVD) or a compact disc (CD). In other embodiments, the computer/processor readable medium may be any medium that has been programmed in such a way as to carry out an inventive function. The computer/processor readable medium may be a removable memory device such as a memory stick or memory card (SD, mini SD, micro SD or nano SD) or an embedded or external non-volatile memory (e.g. flash or MRAM).

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A reconciliation module for a node of a multidrop bus network, the node comprising a MAC module and a PHY module, the reconciliation module comprising circuitry configured to:
assert a sense signal until the beginning of each transmit opportunity of the node;
de-assert the sense signal at that moment to cause the MAC module to send available data to the reconciliation module to start transmission of the data on the multidrop bus network via the PHY module at the respective transmit opportunity; and
**characterized in that** the circuitry is further configured to re-assert the sense signal on receipt of the data from the MAC module or time-out of the respective transmit opportunity.

2. The reconciliation module of claim 1, wherein the MAC module is configured to delay sending of the data by a wait time after de-assertion of the sense signal, and wherein the reconciliation module is configured to pass the data received from the MAC module to the PHY module for transmission on the multidrop bus network without transmitting a filler sequence during the wait time of the MAC module.

3. The reconciliation module of claim 2, wherein each transmit opportunity has a duration which is equal to or greater than the wait time of the MAC module.

4. The reconciliation module of claim 2 or 3, wherein the wait time of the MAC module is equal to an inter-packet-gap length.

5. The reconciliation module of any preceding claim, wherein, in the event the MAC module sends data to the reconciliation module that cannot be transmitted on the multidrop bus network starting at a transmit opportunity, the reconciliation module is configured to:
assert a collision signal on receipt of the data from the MAC module to stop the MAC module from continuing to send the data; and
control the sense signal to cause the MAC module to resend the data for transmission starting at the next transmit opportunity.

6. The reconciliation module of any preceding claim, wherein the data sent by the MAC module comprises a plurality of data frames within the same sequence for transmission starting at a transmit opportunity, and wherein the reconciliation module is configured to insert an active-idle sequence between adjacent data frames to prevent the multidrop bus network from becoming idle before the plurality of data frames have been transmitted.

7. The reconciliation module of any preceding claim, wherein the reconciliation module is bufferless.

8. A node of a multidrop bus network, the node comprising the reconciliation module of any preceding claim, the MAC module and the PHY module.

9. The node of claim 8, wherein the multidrop bus network is an Ethernet network, the MAC module is an Ethernet CSMA/CD MAC layer and the PHY module is a 10BASE-T1S PHY layer.

10. A multidrop bus network comprising a plurality of nodes as defined in claim 8 or 9.

11. A method of collision avoidance for a node of a multidrop bus network, the node comprising a reconciliation module, a MAC module and a PHY module, the method comprising:
asserting, by the reconciliation module, a sense signal until the beginning of each transmit opportunity of the node;
de-asserting, by the reconciliation module, the sense signal at that moment to cause the MAC module to send available data to the reconciliation module to start transmission of the data on the multidrop bus network via the PHY module at the respective transmit opportunity; and
**characterized by** re-asserting,
by the reconciliation module, the sense signal on receipt of the data from the MAC module or time-out of the respective transmit opportunity.

12. A computer program comprising computer code configured to perform the steps of the method of claim 11.

## Patentansprüche

1. Abstimmungsmodul für einen Knoten eines Multidrop-Busnetzwerks, wobei der Knoten ein MAC-Modul und ein PHY-Modul umfasst, wobei das Abstimmungsmodul eine Schaltungsanordnung umfasst, die für Folgendes ausgelegt ist:
Aktivieren eines Erfassungssignals bis zum Beginn jeder Übertragungsgelegenheit des Knotens;
Deaktivieren des Erfassungssignals zu diesem Zeitpunkt, um zu bewirken, dass das MAC-Modul verfügbare Daten an das Abstimmungsmodul sendet, um die Übertragung der Daten auf dem Multidrop-Busnetzwerk über das PHY-Modul bei der jeweiligen Übertragungsgelegenheit zu beginnen; und
**dadurch gekennzeichnet, dass** die Schaltungsanordnung ferner dazu ausgelegt ist, das Erfassungssignal beim Empfang der Daten von dem MAC-Modul oder beim Timeout der jeweiligen Übertragungsgelegenheit erneut zu aktivieren.

2. Abstimmungsmodul nach Anspruch 1, wobei das MAC-Modul dazu ausgelegt ist, das Senden der Daten nach der Deaktivierung des Erfassungssignals um eine Wartezeit zu verzögern, und wobei das Abstimmungsmodul dazu ausgelegt ist, die von dem MAC-Modul empfangenen Daten an das PHY-Modul zur Übertragung auf dem Multidrop-Busnetzwerk weiterzuleiten, ohne während der Wartezeit des MAC-Moduls eine Füllsequenz zu übertragen.

3. Abstimmungsmodul nach Anspruch 2, wobei jede Übertragungsgelegenheit eine Dauer aufweist, die gleich oder größer als die Wartezeit des MAC-Moduls ist.

4. Abstimmungsmodul nach Anspruch 2 oder 3, wobei die Wartezeit des MAC-Moduls gleich einer Inter-Paket-Lücken-Länge ist.

5. Abstimmungsmodul nach einem der vorhergehenden Ansprüche, wobei, falls das MAC-Modul Daten an das Abstimmungsmodul sendet, die beginnend bei einer Übertragungsgelegenheit nicht auf dem Multidrop-Busnetzwerk übertragen werden können, das Abstimmungsmodul konfiguriert ist zum:
Aktivieren eines Kollisionssignals beim Empfang der Daten vom MAC-Modul, um das MAC-Modul daran zu hindern, die Daten weiter zu senden; und
Steuern des Erfassungssignals, um zu bewirken, dass das MAC-Modul die Daten für die Übertragung ab der nächsten Übertragungsgelegenheit erneut sendet.

6. Abstimmungsmodul nach einem der vorhergehenden Ansprüche, wobei die durch das MAC-Modul gesendeten Daten beginnend bei einer Übertragungsgelegenheit mehrere Datenrahmen innerhalb derselben Sequenz zur Übertragung umfassen, und wobei das Abstimmungsmodul dazu ausgelegt ist, eine Aktiv-Inaktiv-Sequenz zwischen benachbarten Datenrahmen einzufügen, um zu verhindern, dass das Multidrop-Busnetzwerk inaktiv wird, bevor die mehreren Datenrahmen übertragen wurden.

7. Abstimmungsmodul nach einem der vorhergehenden Ansprüche, wobei das Abstimmungsmodul pufferlos ist.

8. Knoten eines Multidrop-Busnetzwerks, wobei der Knoten das Abstimmungsmodul nach einem der vorhergehenden Ansprüche, das MAC-Modul und das PHY-Modul umfasst.

9. Knoten nach Anspruch 8, wobei das Multidrop-Busnetzwerk ein Ethernet-Netzwerk ist, das MAC-Modul eine Ethernet-CSMA/CD-MAC-Schicht ist und das PHY-Modul eine 10BASE-T1S-PHY-Schicht ist.

10. Multidrop-Busnetzwerk, das mehrere Knoten nach Anspruch 8 oder 9 umfasst.

11. Verfahren zur Kollisionsvermeidung für einen Knoten eines Multidrop-Busnetzwerks, wobei der Knoten ein Abstimmungsmodul, ein MAC-Modul und ein PHY-Modul umfasst, wobei das Verfahren Folgendes umfasst:
Aktivieren eines Erfassungssignals bis zum Beginn jeder Übertragungsgelegenheit des Knotens durch das Abstimmungsmodul;
Deaktivieren des Erfassungssignals zu diesem Zeitpunkt durch das Abstimmungsmodul, um das MAC-Modul zu veranlassen, verfügbare Daten an das Abstimmungsmodul zu senden, um die Übertragung der Daten auf dem Multidrop-Busnetzwerk über das PHY-Modul bei der jeweiligen Übertragungsgelegenheit zu beginnen; und
**dadurch gekennzeichnet, dass** das Erfassungssignal beim Empfang der Daten von dem MAC-Modul oder beim Timeout der jeweiligen Übertragungsgelegenheit durch das Abstimmungsmodul erneut aktiviert wird.

12. Computerprogramm, das Computercode umfasst, der dazu ausgelegt ist, die Schritte des Verfahrens nach Anspruch 11 durchzuführen.

## Revendications

1. Module de réconciliation pour un nœud d'un réseau de bus multipoint, le nœud comprenant un module MAC et un module PHY, le module de réconciliation comprenant des circuits configurés pour :
activer un signal de détection jusqu'au début de chaque opportunité d'émission du nœud ;
désactiver le signal de détection à cet instant pour amener le module MAC à envoyer des données disponibles au module de réconciliation afin de démarrer l'émission des données sur le réseau de bus multipoint via le module PHY lors de l'opportunité d'émission respective ; et
**caractérisé en ce que** le circuit est en outre configuré pour réactiver le signal de détection lors de la réception des données en provenance du module MAC ou lors de l'expiration de l'opportunité d'émission respective.

2. Module de réconciliation selon la revendication 1, dans lequel le module MAC est configuré pour retarder l'envoi des données d'un temps d'attente après la désactivation du signal de détection, et dans lequel le module de réconciliation est configuré pour laisser passer les données reçues du module MAC vers le module PHY pour émission sur le réseau de bus multipoint sans émettre de séquence de remplissage pendant le temps d'attente du module MAC.

3. Module de réconciliation selon la revendication 2, dans lequel chaque opportunité d'émission a une durée qui est égale ou supérieure au temps d'attente du module MAC.

4. Module de réconciliation selon la revendication 2 ou 3, dans lequel le temps d'attente du module MAC est égal à une longueur d'intervalle entre paquets.

5. Module de réconciliation selon l'une quelconque des revendications précédentes, dans lequel, dans le cas où le module MAC envoie au module de réconciliation des données qui ne peuvent pas être émises sur le réseau de bus multipoint à partir d'une opportunité d'émission, le module de réconciliation étant configuré pour :
activer un signal de collision lors de la réception des données en provenance du module MAC pour empêcher le module MAC de continuer à envoyer les données ; et
commander le signal de détection pour amener le module MAC à envoyer de nouveau les données pour émission à partir de l'opportunité d'émission suivante.

6. Module de réconciliation selon l'une quelconque des revendications précédentes, dans lequel les données envoyées par le module MAC comprennent une pluralité de trames de données dans la même séquence pour émission lors de l'opportunité d'émission, et dans lequel le module de réconciliation est configuré pour insérer une séquence active-inactive entre des trames de données adjacentes pour empêcher le réseau de bus multipoint de devenir inactif avant que la pluralité de trames de données aient été émises.

7. Module de réconciliation selon l'une quelconque des revendications précédentes, dans lequel le module de réconciliation est sans mémoire tampon.

8. Nœud d'un réseau de bus multipoint, le nœud comprenant le module de réconciliation selon l'une quelconque des revendications précédentes, le module MAC et le module PHY.

9. Nœud selon la revendication 8, dans lequel le réseau de bus multipoint est un réseau Ethernet, le module MAC est une couche MAC Ethernet CSMA/CD et le module PHY est une couche PHY 10BASE-T1S.

10. Réseau de bus multipoint comprenant une pluralité de nœuds tels que définis dans la revendication 8 ou la revendication 9.

11. Procédé d'évitement de collision destiné à un nœud d'un réseau de bus multipoint, le nœud comprenant un module de réconciliation, un module MAC et un module PHY, le procédé comprenant les étapes suivantes :
activation, par le module de réconciliation, d'un signal de détection jusqu'au début de chaque opportunité d'émission du nœud ;
désactivation, par le module de réconciliation, du signal de détection à cet instant pour amener le module MAC à envoyer des données disponibles au module de réconciliation pour démarrer l'émission des données sur le réseau de bus multipoint via le module PHY lors de l'opportunité d'émission respective ; et
**caractérisé par** la réactivation, par le module de réconciliation, du signal de détection lors de la réception des données en provenance du module MAC ou de l'expiration de l'opportunité d'émission respective.

12. Programme informatique comprenant un code informatique configuré pour exécuter les étapes du procédé selon la revendication **11.**
